# EUROPEAN PATENT APPLICATION

(11) **EP 2 600 261 A2**
(43) Date of publication of application: **05.06.2013**
(21) Application number: 12193185.1
(22) Date of filing: 19.11.2012
(51) Int. Cl.: G06F 17/30

(54) **Tagging Method**

(30) Priority: 30.11.2011 US 201113307095
(71) Applicant: F-Secure Corporation, 00181 Helsinki (FI)
(72) Inventor: Torkkel, Juha, 00181 Helsinki (FI)
(74) Representative: Lind, Robert

(57) **Abstract**

In accordance with an example embodiment of the present invention, there is provided a computing device, comprising: at least one processor; and at least one memory including computer program code the at least one memory and the computer program code configured to, with the at least one processor, cause the device to perform at least the following: retrieving a set of images from a content storage; duplicating the set of images retrieved; creating a random array from the duplicated set of images; rendering a memory game using the created random array; detecting association of one or more notes with a specific image of the array during the memory game; and attaching metadata to the image based on the detected note.

## Description

### TECHNICAL FIELD

The exemplary and non-limiting embodiments of the present application relate generally to methods, apparatuses and computer programs and, more specifically, to the field of tagging and managing digital images.

### BACKGROUND

With the growing number of digital cameras, the amount of photographs people have on their computers, mobile phones or other devices or on different photo storage web sites has increased dramatically. Managing and searching these photos can be a challenging task.

Different image organizer software has been developed to find ways to tag and rate photographs. However, when you have hundreds or thousands of photographs to tag, tagging them manually is time-consuming and tedious. This is why the traditional method of tagging photos manually is not very efficient and people are not motivated to do it.

Some automatic indexing methods for digital images are inefficient for browsing. There are certain tasks that human perform better than computers. The human ability to interpret and identify patterns, objects, people, places, moods, and times within digital images excels in both accuracy and quality compared to image recognition software. Therefore, tagging of digital images is most effectively performed by humans, although, most users find the task overwhelming.

### SUMMARY

The claims describe various aspects of examples of the invention.

According to one aspect of the present invention, there is provided a tagging method, comprising: retrieving a set of images from a content storage; duplicating the set of images retrieved; creating a random array from the duplicated set of images; rendering a memory game using the created random array; detecting association of one or more notes with a specific image of the array during the memory game; and attaching metadata to the image based on the detected note.

According to a second aspect of the present invention, there is provided computer game server for tagging digital images, comprising: a loading module for retrieving a set of images from a content storage into a game terminal for playing a memory game; a duplicating module for duplicating the set of images retrieved; a generation module for creating a random array from the duplicated set of images; a rendering module for rendering a memory game using the created random array; a detection module for detecting association of one or more notes with a specific image of the array during the memory game; and a tagging module for attaching metadata to the image based on the detected note.

According to a third aspect of the present invention, there is provided a computing system, comprising: at least one processor; and at least one memory including computer program code, the at least one memory and the computer program code configured to, with the at least one processor, cause the device to perform at least the following: retrieving a set of images from a content storage; duplicating the set of images retrieved; creating a random array from the duplicated set of images; rendering a memory game using the created random array; detecting association of one or more notes with a specific image of the array during the memory game; and attaching metadata to the image based on the detected note.

According to a fourth aspect of the present invention, there is provided a computer program product comprising a computer-readable medium bearing computer program code embodied therein for use with a computer, the computer program code comprising: code for retrieving a set of images from a content storage; code for duplicating the set of images retrieved; code for creating a random array from the duplicated set of images; code for rendering a memory game using the created random array; code for detecting association of one or more notes with a specific image of the array during the memory game; and code for attaching metadata to the image based on the detected note.

### BRIEF DESCRIPTION OF THE DRAWINGS

The accompanying drawings provide a more complete understanding of the example embodiments of the present invention, according to the following descriptions:

Figure 1 shows a simplified block diagram that illustrates an example of apparatuses according to the invention;

Figure 2 shows an example of a method;

Figure 3 is a signal sequence diagram showing an example according to an embodiment of the present invention; and

Figures 4 and 5 illustrate examples of use case scenarios.

### DETAILED DESCRIPTON OF THE DRAWINGS

Example embodiments of the present invention are later described in more detail with reference to the accompanying drawings, in which some embodiments of the invention are shown. The invention may be embodied in many different forms and should not be construed as limited to the embodiments presented here. Although the specification may refer to "an", "one", or "some" embodiment in several locations, this does not necessarily mean that each such reference is to the same embodiment, or that the feature only applies to a single embodiment. Single features of different embodiments may also be combined to provide other embodiments.

The present invention can apply to any terminal, server, corresponding component, or to any communication system or combination of different communications systems that support the required functionality. Due to the rapid development of the specifications of computer systems and protocols that are used, all words and expressions should be interpreted broadly; they are intended only to illustrate the embodiment.

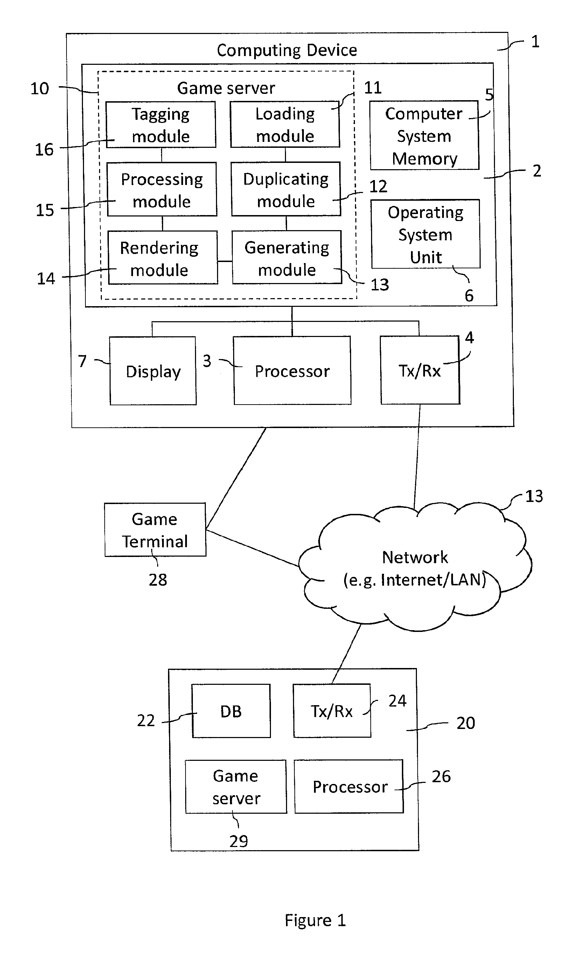

Figure 1 illustrates a general example of a computer system and apparatuses in which the embodiments of the invention may be applied. It only shows the elements and functional entities that are required for understanding the arrangement according to an embodiment of the invention. Other components have been omitted for the sake of simplicity. The implementation of the elements and functional entities may vary from that shown in Figure 1. The connections shown in Figure 1 are logical connections, and the actual physical connections may be different. It is apparent to a person skilled in the field that the arrangement may also comprise other functions and structures.

Figure 1 shows an example of a computer system 1 that is suitable for implementing the methods that are described below. The computer system 1 can be implemented as a combination of computer hardware and software. The computer system 1 comprises a memory 2, a processor 3, a display 7 and a transceiver 4. The memory 2 stores the various programs or executable files that are implemented by the processor 3, and provides a computer system memory 5 that stores any data required by the computer system 1. The programs or executable files that are stored in the memory 2, and implemented by the processor 3, can include an operating system unit 6 and a game server 10. The memory 2 also provides a memory that is used by the game server 10. The loading module 11, duplicating module 12, generating module 13, rendering module 14, processing module 15 and the tagging module 16 can be subunits of the game server 10. The transceiver 4 is used to communicate over a network 13 such as a LAN or the Internet. Typically, the computer system 1 may be a personal computer (PC), laptop, personal data assistant (PDA) or mobile phone, mobile Internet device, gaming device, or any other suitable device.

Figure 1 also illustrates an example of a game terminal 28. The transceiver 4 of the computer system 1 may communicate with the game terminal over wireless or wired connections and the network 13. The game terminal 28 may also comprise a processor, memory, transceiver and display (not separately shown).

Additionally, Figure 1 illustrates an example of a server system 20 that in some embodiments may communicate with the computer system 1 or the game terminal 28, or with both. The server system 20 may comprise a digital image database 22, a transceiver 24, a processor 26 and a game server 29. In one example, the server system 20 may be a cloud storage server where users may store and backup their content.

It should be noted that the computer system 1, the server system 20 and the game terminal 28 are only examples of apparatuses or systems, and that they may have more or fewer components than shown, may combine two or more components, or may have a different configuration or arrangement of the components. All the necessary features of an implementation may reside physically on the same device, for example, in the computing device 1. In an embodiment, the actual game may be played via the game terminal 28 and the game server 10 operates the game terminal 28 over the network 13. Further, the digital image database 22, such as a content storage unit, may reside in any device. Further, the number of game terminals 28, server systems 20 and computer systems 1 can be changed. Additionally, different computing resources can be combined or connected.

The embodiments of the game can be implemented in various manners. For example, the entire game may be run on each device or system 1, 20, 28 separately and by using the computing resources independently. The game may also be run on the game server 1 while the game terminal 28 may run just a client, such as a Java applet. Further, the set of images to be tagged may reside in any of the devices or systems or the database 22.

Consider a traditional memory game where you have a deck of cards with pictures. The deck holds two copies of same picture and there is an equal amount of cards, that is, every picture has a pair. After shuffling the cards, the pictures are spread down so that no one knows which card is where and the game may begin. One player picks up a card, looks at the picture and then picks up another card. If both cards have the same picture, the player removes the cards from the game and may continue doing the same thing again. If the pictures do not match, the cards are placed exactly where they were and the next player gets the turn to try to find another matching pair. The more cards there are, the harder the game becomes.

The embodiments of the invention enable tagging of digital images via playing a computer game, a memory game in this case.

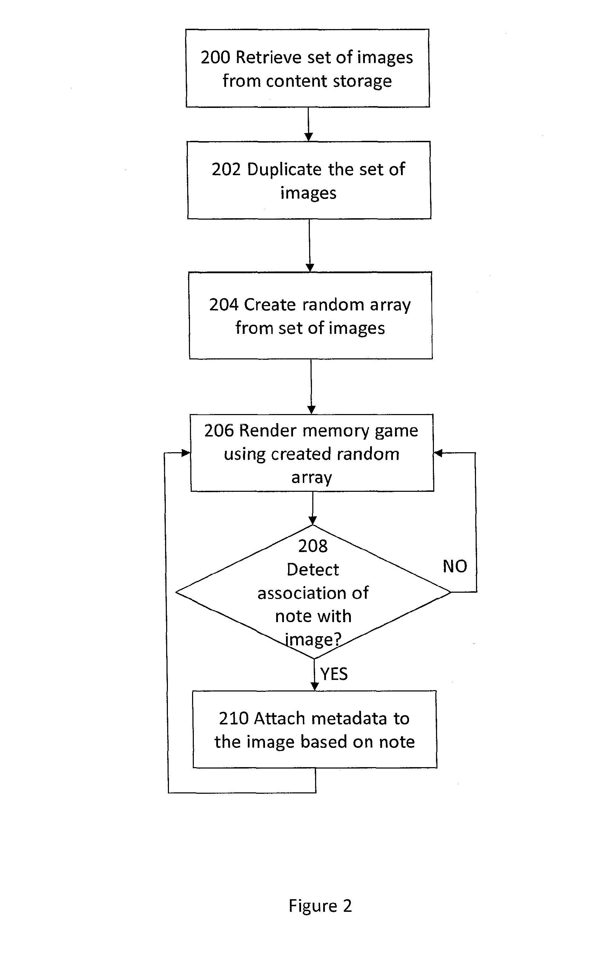

Figure 2 is a flow diagram illustrating an example of a process.

In 200, a set of images is retrieved from a content storage. In an embodiment, the loading module 11 loads the set of images provided from the database 22.

In 202, the set of images is duplicated, for example, by the duplicating module 12.

In 204, a random array is created from the set of images, for example by the generating module 13.

In 206, a memory game is rendered by using the created random array, for example by the rendering module 14.

In 208, it is detected whether any notes are associated with any images, for example, by the processing module 15. If yes, then 210 is entered where metadata is attached to the image based on the notes, for example, by the tagging module 16.

In an embodiment, a selection of an image from the array is detected, the selected image is presented on the display 7, and the note or notes that are being associated with that image are detected.

In an embodiment, a search request that includes one or more search terms is detected by the game server 10, images that are associated with notes comprising the one or more search terms are returned, and highlighted on the display.

In an embodiment, metadata that is already attached to the images is also retrieved from the content storage and at least part of the retrieved metadata is presented on the display during the memory game.

In an embodiment, for each game round the following steps are performed: the set of images of the random array are presented as blind cards on the display, a selection of a first blind card is detected, an image of the first blind card and the associated notes are revealed on the display, a selection of a second blind card is detected, an image of the second blind card and the associated notes are revealed on the display, the notes associated with the image of the first blind card or with the image of the second blind card are edited and the images are represented again as blind cards if the images of the first and second blind cards are not the same.

In an embodiment, at least part of the content storage images are crowdsourced with metadata tagging by performing the described steps in more than one computer devices. Crowdsourcing is an activity where a large base of anonymous individuals carry out simple tasks. The outcome of these tasks is then gathered to one central location and assembled to form a specific, larger complete work entity. When many people tag images by playing the game, eventually a large number of images are tagged.

The attached metadata may be enabled to be used by other applications as well. Since the metadata is associated to a specific image, other outside applications may be allowed to use this metadata associated to this specific image.

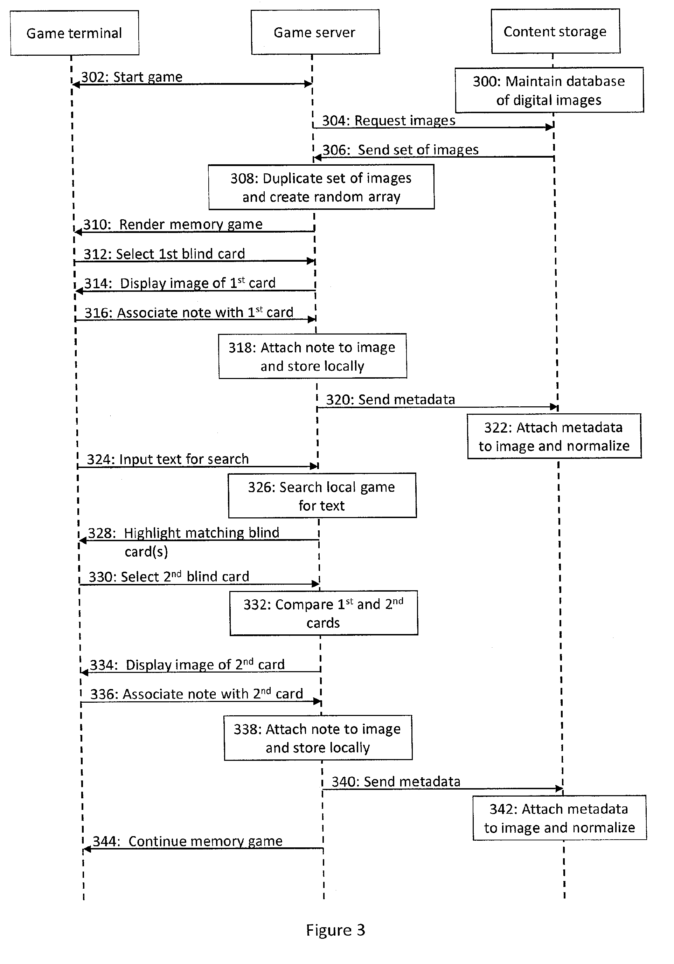

Figure 3 is a signal sequence diagram that illustrates an example of the process. At 300, a database of digital images is maintained in a content storage.

In 302, the memory game is started by the user indicating the game server that he wants to start a new game via the user interface of the game terminal. The game start may be detected in many ways, for example, detecting launching of the game application may start the game. It is also possible that the actual game is only started when the player is detected to have chosen a first card from the game canvas with preloaded images.

In 304, the game server requests digital images from the content storage. In an example, a game front-end contacts a game back-end to request a set of photographs and the game back-end then contacts the content storage platform to get the set of photographs.

In 306, the content storage sends the requested set of digital images to the game server. The content storage platform first selects a set of photographs that are allowed to be used in the game, for example. In an embodiment, the selection of photographs can be either totally random or biased toward those images that have no associated tags yet. The selection process may also depend on further indications from the user. For example, the user may be requested to choose from specific types of digital images, such as images of animals, people, nature, or family that he wishes to tag or use when playing the game. In an embodiment, this step may also include gathering all the previously stored tags that have been generated by the game. In an embodiment, the content storage sends the requested set of digital images or references to the digital images to the game back-end and the game back-end further propagates the digital images to the game front-end.

In 308, the game server duplicates the set of images and creates a random array. In an embodiment, the game front-end duplicates the images in a memory so that two copies of each image exist in the game. It will be obvious to a skilled person in the field, that instead of actually duplicating the images in the memory, the duplicating may in practice be realized with references or pointers to the images in the memory. The game front-end also contstructs a random positional array from all the images. In an embodiment, the created array is a positional 2D array.

In 310, the game server renders the memory game to be run in the game terminal. In an embodiment, the game front-end presents the created positional array of digital images as "blind cards" (face down, that is, the image not shown) in the display of the game terminal. The graphics of the positional array can be presented in any layout, for example, as matrices, with regular or unregular rows and columns or with random layouts.

In 312, the user selects the first blind card from the gaming canvas by using the user interface of the game terminal. The game server detects the selection made by the user.

In 314, the game server shows the digital image of the selected first card on the user interface. In an embodiment, together with the digital image itself, any associated notes or tags related to this image can also be shown.

In 316, the user associates notes with the first card. The user may write down the notes, for example, to a space reserved for this purpose in the user interface of the game terminal. It is also possible to enter the notes in other ways, for example, by using speech recognition. If the selected card already has notes associated with it, the user may want to edit the notes that he or someone else has entered earlier. The game server detects the notes that are associated with the first card. The game may be implemented in several different ways when considering metadata attached to the images. For example, the game may be started without retrieving any previously entered metadata or all the attached metadata is also retriewed with the images thus enabling a wiki-type editing of the notes, or only part of the metadata is retriewed with the images, for example, only publicly generated metadata is retriewed and privately generated metadata is not.

In 318, the game server attaches the associated notes or edited notes with the image and stores them locally. In an embodiment, the associated notes are only attached to the selected first card and not to its pair (the card having the same image), for example. In other embodiments, it is possible that also the card having the same image is attached to the same notes as its double.

In 320, the game server attaches metadata to the image based on the associated notes and sends the metadata to the content storage as automated tags.

In 322, the content storage then attaches metadata to the digital image and normalizes the tag. The activities for normalizing the tag may store, generate and summarize the autotagging content to the content storage side for consumption in other services also.

In 324, the user enters text to the game terminal user interface to search for notes. While the user is still shown the first picked card and notes associated with it, he can run a search at the same time. The search may also be run in the very beginning of the game when no cards have been selected yet, for example.

In 326, the game server detects the text that was entered for search and based on this, searches the local game for the text. If matching notes associated with one or more images are found on the basis of the search, then the specific blind cards related to these images may be highlighted in the gaming canvas. In an embodiment, the actual notes related to these highlighted cards are not revealed. However, in some embodiments, the notes may be also revealed with the highlighting. If no matching notes are found on the basis of the search, a specific indicator shown on the game terminal may be used to communicate this to the user.

In 328, the matching blind cards are highlighted. The highlighting can be implemented, for example, by showing the cards in different colors or with different features.

In 330, the user selects the second blind card from the gaming canvas by using the user interface of the game terminal. The selected card may be highlighted. The game server detects the selection made by the user.

In 332, the game server compares the selected first and second cards and if they are the same, that is, a pair, the user may be notified that he succeeded in finding a pair. If the two images are not the same, the user may be notified and be offered an opportunity to edit the notes of both images. This allows the user to reiterate previous notes (image descriptions) to get better in-game search hits in the following game rounds.

In 334, the game server then shows the digital image of the selected second card on the user interface. If the two selected cards have the same image, the cards may now be left "open" (face up) on the gaming canvas and the user can continue playing as from step 312 onwards. In an embodiment, the matching cards may also be removed from the gaming canvas.

In 336, the user may associate notes with the second card, for example, in cases where no match was found, to complement the already entered notes or to add new ones. The game server detects the notes being associated with the second card. In an embodiment, it is also possible to add or edit notes associated with the first card at this stage.

In 338, the game server attaches the associated notes or edited notes to the images and stores them locally.

In 340, the game server attaches metadata to the image based on the associated notes and sends the metadata to the content storage as automated tags.

In 342, the content storage unit then attaches metadata to the digital image and normalizes the tag.

In 344, the memory game is continued with the new locally stored notes to the images and with the possibly found matching pairs shown or removed. If no matching pairs are found, both previously selected images are hidden again and returned as blind cards to the gaming canvas. In an embodiment, the game can continue by the user selecting the search feature or the next blind card. When all the pairs have been discovered from the gaming canvas, the game effectively ends. However, there may be post-game interaction, for example, for announcing results, rewards, measurements or comparisons related to the played game or to the set of images used in the game.

In an embodiment, the game server functions may be divided between different entities, for example, between a game backend and a game client. For example, the game backend may then request the set of photographs from the content storage and send them to the game client. Further, the game backend may then receive references to photographs and notes associated to them, and attach the notes as metadata to the photographs referenced to be stored in the content storage. As for the game client, the functions of it may in turn include: duplicating of images, generating of the random array from the images, and executing the actual game where notes are entered and searched. In the background, the game may then transmit data to the game backend. In an embodiment, it may be that as the player has entered a note associated to a specific image, the note is first stored locally to the game as a note that can be used in search and also edited. Whereas only after the note is transmitted to the content storage side, then it becomes metadata and is closely attached or associated to the original image, for example.

Without limiting the scope, interpretation, or application of the claims appearing below, the technical effects of one or more of the example embodiments disclosed here improve tagging of large amounts of digital images. By automatically associating crowdsourced, general complementary information (that is, metadata or "tags") with the photographs, the user may enjoy pre-tagged photographs. The embodiments of the invention enable tagging digital images more efficiently and easily. The example embodiments also improve user-machine interaction, and provide a fun user experience related to tagging.

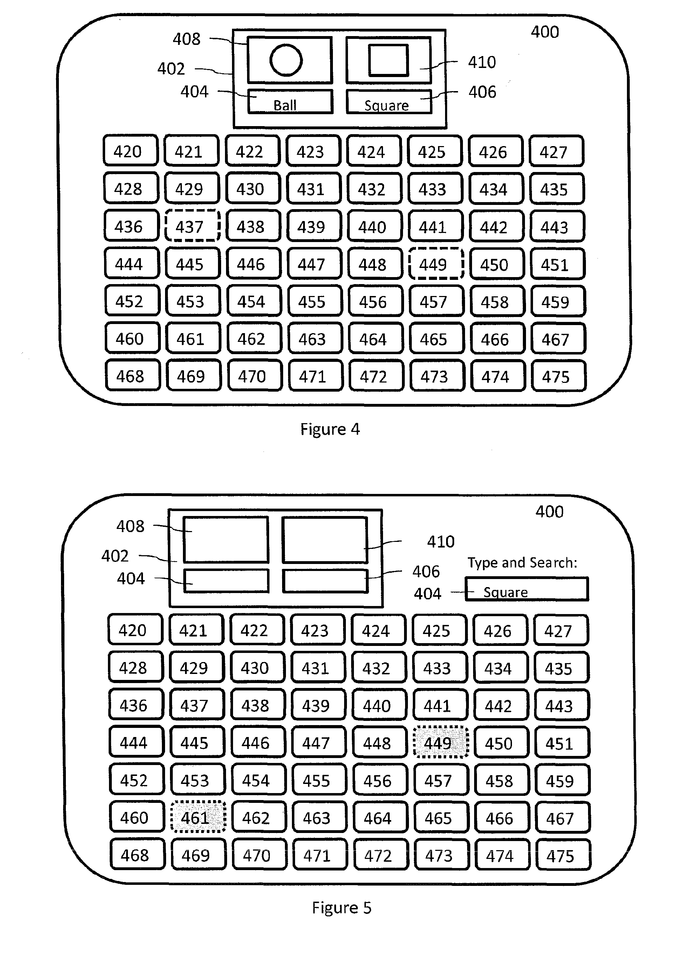

In the following example use case scenario of Figure 4, a display 400 of a game terminal is shown. In this exemplary scenario, the set of digital images retrieved for the game are presented as blind cards 420 to 475 on the display 400. The display has an area 402 where the selected blind cards can be revealed to the user. In this case, the user has already selected the first blind card 437 and the second blind card 449. Both selected cards 437, 449 are revealed as open cards 408 and 410. The image of the first card 437 shows a ball and the image of the second card 449 shows a square. The user has also entered notes related to the revealed cards 408, 410 to areas 404 and 406.

In an embodiment, the blind cards may be revealed in any area on the display, for example, at the location of the blind card. In this case, a separate area for the open cards 402 may not be necessary. Also the display area for entering notes to be associated with the cards can reside anywhere on the display 400. In the example scenario of Figure 4, because no matching cards were found, the cards are put back to the table and the user can continue the game by picking another card or by entering search text.

The next example scenario of Figure 5 illustrates the search feature. A type and search query area 404 may be anywhere on the display 400 for entering text for the search. In this example, the user has entered the word "Square" on the search area 404 and now every blind card that has the word "Square" associated with its notes is highlighted on the display. In this case, there are two cards 449 and 461 that are highlighted on the display. In some cases there may be several, that is more than two, cards highlighted based on the completed search. If the search does not find any matching words, this may be indicated for the user on the display 400, too.

It should be noted that even though the embodiments have been described here for one player versions, other implementations can be made for two or more players. If there is more than one player, the game rounds may be taken in turns such as in the traditional board memory games. It is possible that in a multiplayer embodiment, the notes entered by individual players may not be revealed to other players of the game to enable fairness of the game experience. In some scenarios, it may be that some of the earlier entered notes may be revealed in multiplayer game option to at least part of the players.

In an embodiment, the difficulty of the game can be gradually increased as the player progresses in the game. For example, the game may start with 10 images and once the player has completed this level, he may advance to the next level, which, for example, contains 20 images. Players can level up gradually and have their own profiles with "career" and experience levels that can be shared.

In an embodiment, a large pool of photographs can be tagged by using crowdsourcing. People may contribute their digital images for auto-tagging purposes to the content storage unit. These images can be used in the memory game according to an embodiment. Because all the notes that have been generated in the game are contributed back to the content storage platform, the information related to the images can be automatically normalized and arranged. For example, a remarkable amount of information associated with the photos may automatically, already exist when the owner of the images starts to search and organize them.

As time goes on and people play the game, the same photograph may be used and tagged by many people. As many people highlight something specific about the photograph, for example, on what makes it unique, the playing produces many perspectives on that photograph.

Because photographs may be very personal in nature, crowdsourcing can sometimes produce only general information about the image. Fore example, a crowd cannot tell from a photo that a fairhaired boy on a lake is in fact the photo owner himself at his summer cottage. However, even this information may be used by the back-end systems to cluster the information for further processing. Some potential clusters may be formed from images having tags comprising: "fair haired young boy" and "on a lake", for example. In some embodiments, this general information may be leveraged to improve the data quality to a more personal level with further processing. For example, the user retags "fair haired boy" to his own name "John" and "childhood" or the user retags "on a lake" to "summer cottage". Furthermore, facial recognition on the images tagged with "fair haired boy" could automatically retag all these images as "John as a child".

There are many different possibilities of selecting which images are played in the game. For example, the player may only wish to play with his own photographs and hence, only tag his own images. In another embodiment, the player may choose an option to play only with public images retriewed from the content storage and thus, produces only crowdsourced data to other players' images. It is also possible to play with both private and public images and, thus tag both.

When the players write their own notes that may later be used as search terms, sooner or later they learn to use terms in notes that are commonly used. For example, the result of the game depends on your strategy of attaching relevant notes that results in descriptive tagging, and using those tags while searching. The level of information should be specific enough so that the images can be easily and accurately differentiated in the searches. This means that playing the game will eventually produce highly accurate tags.

Even if users are not interested in using crowdsourcing for automated photo tagging, the game may still make managing photographs enjoyable through the gaming dynamics. Furthermore, the tags that are produced by playing the game may be used to show clusters of images one by one, which can provide a different approach to managing a large amount of photos. This may also make searching for photos easier.

The inspiration and motivation in the game comes from taking on something that looks overwhelming and next to impossible to accomplish, and accomplishing it by using the search feature and tagged images. For example, you have thousands of blind cards and your goal is to find all the pairs. By playing the game, you can add meaningful tags, which in turn makes managing personal photos easier through iterated tagging and searching. Other complementary rewards that result from the game may be speed, complexity, skill level scores, historical performance and making it possible for the users to compare their performance against other players in their social network.

In an embodiment, the users may receive different feedback, for example, on how quickly the task was completed, high scores for the current complexity level, comparison with friends' results and complexity levels.

The steps, points, signaling messages and related functions described above in relation to Figures 2 and 3 are in no absolute chronological order, and some of the steps may be performed simultaneously or in a different order. Other functions may also be executed between the steps or within the steps, and other signaling messages may be sent between the illustrated ones. Some of the steps can also be left out or replaced by a corresponding step. The system functions illustrate a procedure that may be implemented in one or more physical or logical entities.

The techniques described here may be implemented by various means. An apparatus or system that implements one or more of the described functions with an embodiment comprises not only existing means, but also means for implementing one or more functions of a corresponding apparatus that is described with an embodiment. An apparatus or system may also comprise separate means for each separate function. These techniques may be implemented in one or modules of hardware or their combinations thereof. For software, implementation can be through modules, for example, procedures and functions that perform the functions described here. The software code may be stored in any suitable data storage medium that is readable by processors, computers, memory unit(s) or articles(s) of manufacture, and may be executed by one or more processors or computers. The data storage medium or memory unit may be implemented within the processor or computer, or as an external part of the processor or computer, in which case it can be connected to the processor or computer via various means known in the field.

The programming, such as executable code or instructions, electronic data, databases or other digital information can be stored into memories and may include a processor-usable medium. A processor-usable medium may be embodied in any computer program product or article of manufacture which can contain, store, or maintain programming, data or digital information for use by or in connection with an instruction execution system, including the processor 3, 26 in the exemplary embodiments.

An embodiment provides a computer program product that comprises a computer-readable medium bearing computer program code embodied therein for use with a computer. The computer program code comprises code for code for retrieving a set of images from a content storage, code for duplicating the set of images retrieved, code for creating a random array from the duplicated set of images, code for rendering a memory game using the created random array, code for detecting association of one or more notes to a specific image of the array during the memory game, and code for attaching metadata to the image based on the detected note.

Embodiments of the present invention may be implemented in software, hardware, application logic or a combination of these. In an example of an embodiment, the application logic, software or a set of instructions is maintained on any conventional computer-readable media. In the context of this document, a "computer-readable medium" may be any media or means that can contain, store, communicate, propagate or transport the instructions for use by or in connection with an instruction execution system, apparatus, or device, such as a computer. A computer-readable medium may comprise a computer-readable storage medium that may be any media or means that can contain or store the instructions for use by or in connection with an instruction execution system, apparatus, or device, such as a computer.

The various aspects of the invention are not limited to the combinations that are explicitly set out in the independent claims. Other aspects of the invention may comprise combinations of features from the described embodiments, the dependent claims and the independent claims.

It is obvious to a person skilled in the field that, as the technology advances, the inventive concept can be implemented in various ways. The invention and its embodiments are not limited to the examples described above but may vary within the scope of the claims.

## Claims

1. A tagging method, comprising:
retrieving a set of images from a content storage;
duplicating the set of images retrieved;
creating a random array from the duplicated set of images;
rendering a memory game using the created random array;
detecting association of one or more notes with a specific image of the array during the memory game; and
attaching metadata to the image based on the detected note.

2. The method of claim 1, further comprising: detecting a selection of an image of the array; showing the selected image on a display; and detecting the note being associated with the shown image.

3. The method of claim 1 or 2, further comprising: detecting a search request including one or more search terms; searching for images that are associated with notes comprising the one or more search terms; and highlighting any images that are found on the basis of the search on a display.

4. The method of any one of claims 1 to 3, further comprising: storing the attached metadata associated with the image in the content storage.

5. The method of any one of the preceding claims, further comprising: retrieving metadata that is already attached to the images from the content storage; and presenting at least part of the retrieved metadata on a display during the memory game.

6. The method of any one of the preceding claims, further comprising: for each game round performing the following steps: presenting the set of images of the random array as blind cards on the display; detecting a selection of a first blind card; revealing an image of the first blind card and the associated notes on the display; detecting a selection of a second blind card; revealing an image of the second blind card and the associated notes on the display; editing the notes that are associated with the image of the first blind card and/or with the image of the second blind card and representing the images again as blind cards if the images of the first and second blind cards are not the same.

7. The method of any one of the preceding claims, wherein at least part of the content storage images are crowd sourced with metadata tagging by performing the described steps on more than one computer devices.

8. The method of any one of the preceding claims, further comprising: storing and updating the attached metadata related to the images in the content storage.

9. The method of any one of the preceding claims, further comprising: enabling the attached metadata to be used by other applications.

10. A computer game server for tagging digital images, comprising:
a loading module for retrieving a set of images from a content storage into a game terminal for playing a memory game;
a duplicating module for duplicating the set of images retrieved;
a generation module for creating a random array from the duplicated set of images;
a rendering module for rendering a memory game using the created random array;
a detection module for detecting association of one or more notes with a specific image of the array during the memory game; and
a tagging module for attaching metadata to the image based on the detected note.

11. The computer game server of claim 10, further comprising: a selection module for detecting a selection of an image of the array; and a display module for showing the selected image on a display, and wherein the detection module is further configured to detect the note being associated with the selected image on a display.

12. The computer game server of claim 10 or 11, further comprising: a search module for detecting a search request including one or more search terms and for searching for images that are associated with notes comprising the one or more search terms; and a highlighter module for highlighting any images that are found on the basis of the search on a display.

13. The computer game server of any one of claims 10 to 12, further comprising: a loading module configured to retrieve metadata that is already attached to the images from the content storage; and a display module for presenting at least part of the retrieved metadata on a display during the memory game.

14. The computer game server of any one of claims 10 to 13, wherein for each game round: the display module is further configured to present the set of images of the random array as blind cards on the display; a selection module is configured to detect a selection of a first blind card; the display module is configured to reveal an image of the first blind card and the associated notes on the display; the selection module is configured to detect a selection of a second blind card; the display module is configured to reveal an image of the second blind card and the associated notes on the display; an editing module is configured to edit the notes associated with the image of the first blind card and/or with the image of the second blind card and the display module is configured to represent the images again as blind cards if the images of the first and second blind cards are not the same.

15. A computing system, comprising:
at least one processor; and
at least one memory including computer program code,
the at least one memory and the computer program code configured to, with the at least one processor, cause the device to perform at least the following:
retrieving a set of images from a content storage;
duplicating the set of images retrieved;
creating a random array from the duplicated set of images;
rendering a memory game using the created random array;
detecting association of one or more notes with a specific image of the array during the memory game; and
attaching metadata to the image based on the detected note.

16. The computing system of claim 15, wherein the system is further configured to store the attached metadata associated to the image to the content storage.

17. The computing system of claim 15 or 16, wherein the system is further configured to perform the described steps in more than one computer devices for crowd sourcing at least part of the content storage images with metadata tagging.

18. The computing system of any one of claims 15 to 17, wherein the system is further configured to store and update the attached metadata related to the images in the content storage.

19. The computing system of any one of claims 15 to 18, wherein the system is further configured to enable the attached metadata to be used by other applications.

20. A computer program product comprising a computer-readable medium bearing computer program code embodied therein for use with a computer, the computer program code comprising:
code for retrieving a set of images from a content storage;
code for duplicating the set of images retrieved;
code for creating a random array from the duplicated set of images;
code for rendering a memory game using the created random array;
code for detecting association of one or more notes with a specific image of the array during the memory game; and
code for attaching metadata to the image based on the detected note.
